# EUROPEAN PATENT SPECIFICATION

(11) **EP 1 112 921 B1**
(45) Date of publication and mention of the grant of the patent: **10.08.2005**
(21) Application number: 00128580.8
(22) Date of filing: 27.12.2000
(51) Int. Cl.: B62M 7/12, B62M 9/06

(54) **Transmission means and motor vehicle with a transmission means**
Übertragungsmittel und Fahrzeug mit Übertragungsmittel
Moyen de transmission et véhicule avec moyen de transmission

(30) Priority: 27.12.1999 JP 37157399
(43) Date of publication of application: 04.07.2001
(73) Proprietor: YAMAHA HATSUDOKI KABUSHIKI KAISHA, Iwata-shi Shizuoka-ken (JP)
(72) Inventor: Suzuki, Hitoshi, Iwata-shi, Shizuoka-ken (JP); Inomori, Toshinori, Iwata-shi, Shizuoka-ken (JP)
(74) Representative: Grünecker, Kinkeldey, Stockmair & Schwanhäusser Anwaltssozietät

(56) References cited:
- US-A- 4 531 928
- US-A- 4 631 977
- US-A- 5 222 572
- PATENT ABSTRACTS OF JAPAN vol. 016, no. 087 (M-1217), 3 March 1992 (1992-03-03) & JP 03 271090 A (YAMAHA MOTOR CO LTD), 3 December 1991 (1991-12-03)
- PATENT ABSTRACTS OF JAPAN vol. 1998, no. 14, 31 December 1998 (1998-12-31) & JP 10 231759 A (YAMAHA MOTOR CO LTD), 2 September 1998 (1998-09-02)

## Description

This invention relates to a transmission means especially for a unit type of engine with a V-belt type of automatic transmission according to the preamble of independent claim 1. Moreover, the present invention also relates to a motor vehicle with an engine especially for a unit type of engine, a vehicle body and such a transmission means.

The unit swing type of engine for example mounted on a small-sized scooter type of motorcycle is constituted as a single unit assembling together an engine as a driving power source, and a transmission mechanism including a V-belt type of automatic speed reduction mechanism, etc. in a transmission case.

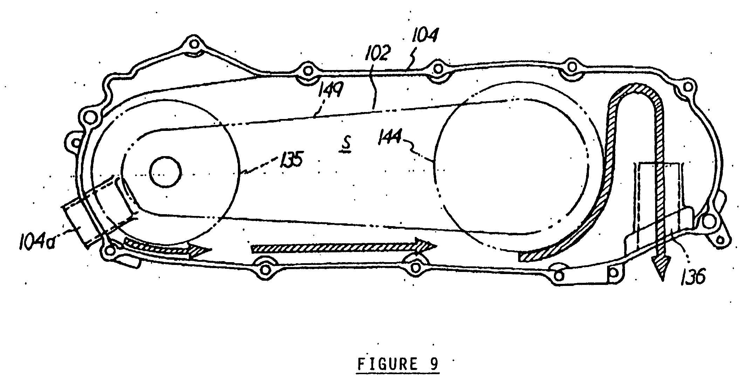

Such a unit swing type of engine employs a constitution shown in FIG. 9: a V-belt type of automatic transmission 102 is accommodated in a belt chamber S covered with a transmission case cover 104, and the belt chamber S is cooled with cooling air introduced into the belt chamber S.

The V-belt type of automatic transmission 102 is constituted with a drive pulley 135, a driven pulley 144, and an endless V-belt 149 fitted around and stretched between the drive and driven pulleys. The belt chamber S is provided in its front lower corner with a cooling air inlet 104a open in the direction obliquely down forward (left in the figure) and in its rear part with a cooling air outlet 136 open in the downward direction. Cooling air introduced with a cooling fan (not shown) provided on the drive pulley 135 of the V-belt type of automatic transmission 102 from the cooling air inlet 104a into the belt chamber S, flows in the direction of the arrow, cools the belt chamber S, and flows out of the belt chamber S through the cooling air outlet 136.

The conventional constitution shown in FIG. 9, however, has problems: Since the width of the flow passage formed between the outside wall of the transmission case cover 104 and the drive pulley 135 of the V-belt type of automatic transmission 102 is constant, the velocity in the belt chamber S of the cooling air introduced into the belt chamber S is great. Therefore, the cooling air having a great velocity is bent by a large angle in a U-shape and discharged out of the cooling air outlet 136. This causes problems of; a great flow energy loss of the cooling air, poor cooling efficiency in the belt chamber 5, and a great power loss.

A transmission means as indicated above can be taken from prior art document US 4,531,928. Said transmission means comprises a V-belt type of automatic transmission with a drive pulley and a driven pulley connected by an endless V-belt. Said transmission is covered by a housing, wherein said housing covers the respective pulley and the space between said pulleys to cover the V-belt as well. Said housing comprises an inner surface, which is arranged close to the circumferential part of the driven pulley, such that the inner surface follows the circumferential shape of said driven pulley. Thus, a space between the inner surface of the housing and the circumferential part of the driven pulley is small and has a constant cross section wherein said space acts as some kind of air passage around said driven pulley. Said air passage with a constant cross section extends from the bottom part of the cover to an upper part of said cover and is connected with a communication hole. Said communication hole is provided for guiding the cooling air into a discharge passage of a chamber that guides the air flow to a bottom side of the transmission means, wherein an opening is provided to exhaust said air to the outside.

It is an objective of the present invention to provide a transmission means especially for a unit type of engine with a V-belt type of automatic transmission and a motor vehicle with an engine, especially for a unit type of engine, a vehicle body and such a transmission means having a high cooling efficiency in the belt chamber.

According to a first aspect of the present invention said objective is solved by a transmission means having the features of independent claim 1.

It is a special advantage of the invention to provide a transmission means which can reduce power loss.

According to a preferred embodiment of the transmission means, said transmission case cover comprises a first outside wall surface covering the driven pulley and a third outside wall surface extending from said first outside wall surface and formed around a contour of said driven pulley to form said air passage around said driven pulley, wherein a cooling air outlet is formed on said third outside wall surface.

Said third outside wall surface is formed to cover a lower edge area of the driven pulley and extends to cover a rear edge of said driven pulley to form said air passage around said driven pulley, wherein said cooling air outlet is formed in a rear part of said third outside wall surface above and behind said rear edge of the driven pulley.

Preferably, said cooling air outlet is formed on said third outside wall surface on an extended tangent line of said air introducing passage.

According to a preferred embodiment of the transmission means, said driven pulley is connected with a driven shaft and an output shaft is provided which is spaced from driven shaft and connected therewith, and said transmission case cover comprises a second outside wall surface covering the output shaft and said third outside wall surface is interconnecting said first outside wall surface and said second outside wall surface to constitute a stepped portion of the transmission case cover.

According to a preferred embodiment, a soundproof cover is provided to cover said outside wall surfaces of the transmission case cover, wherein a space is formed between said soundproof cover and the transmission case cover and said cooling air outlet is made open to said space.

Preferably, an arcuate rib is provided on the second outside wall surface to define said space, wherein said cooling air outlet is open in an upper part of said space and said space is provided with a further cooling air outlet in a downward direction.

According to a preferred embodiment, a cooling air inlet is provided on said transmission case and an further air passage is provided around said drive pulley from said cooling air inlet and a cross-sectional area of said air passage gradually increases in a direction of a cooling air flow.

According to a second aspect of the present invention said objective is solved by a motor vehicle with an engine, especially for a unit type of engine, a vehicle body and a transmission means according to at least one of the claims 1 to 8.

Preferred embodiments of the present invention are laid down in the dependent claims.

In the following, the present invention is explained in greater detail with respect to several embodiments thereof in conjunction with the accompanying drawings, wherein:
FIG. 1 is a cross-sectional plan view of a unit swing type of engine;
FIG. 2 is a cross-sectional plan view of the four-stroke cycle engine portion of the unit swing type of engine;
FIG. 3 is a cross-sectional side view of the four-stroke cycle engine portion of the unit swing type of engine;
FIG. 4 is an inside view of a transmission case cover;
FIG. 5 is an external view of the transmission case cover;
FIG. 6 a side view of the rear part of the transmission case cover with another cover attached;
FIG. 7 is a cooling air flow diagram in the transmission case cover structure;
FIG. 8 is a perspective view of the rear part of the transmission case; and
FIG. 9 is a cooling air flow diagram in a conventional transmission case cover structure.

An embodiment will be described below in reference to the appended figures.

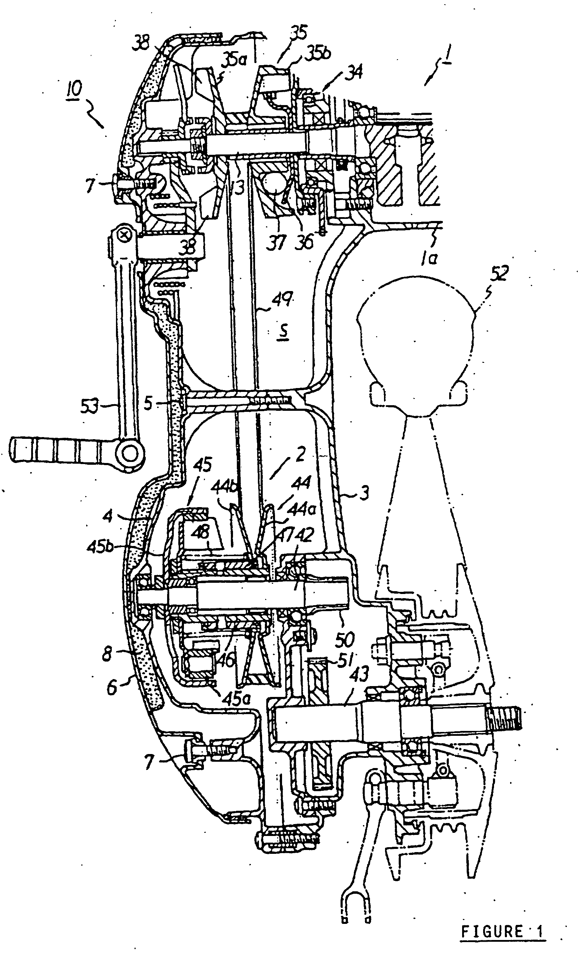

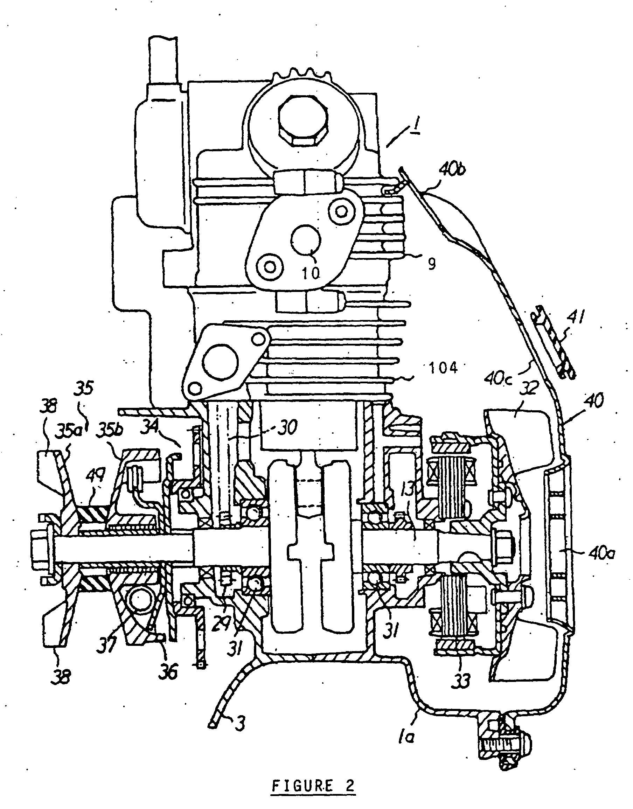

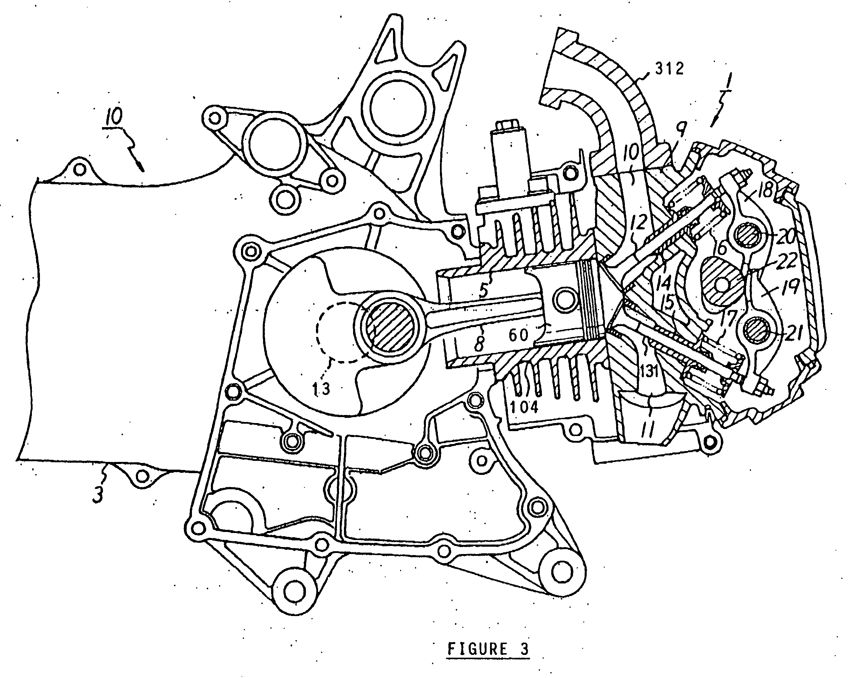

FIG. 1 is a plan view, partially in cross section, of a unit swing type of engine. FIG. 2 is a plan view in cross section of a four-stroke cycle engine portion of the unit swing type of engine. FIG. 3 shows a side cross-sectional view of the same.

The unit swing type of engine 10 of this embodiment is to be mounted on a scooter type of motorcycle (motor vehicle) (not shown) and constituted with; a forced air cooled type of four-stroke cycle engine (hereinafter simply called an engine) 1, and a transmission mechanism including a V-belt type of automatic transmission 2 disposed in a transmission case 3 extending from the left side of the crankcase 1a of the engine 1 toward the rear of the vehicle body, all assembled in a compact unit.

As shown in FIG. 1, a transmission case cover 4 is attached using a bolt 5 onto the side opening of the transmission case 3. A belt chamber S is formed inside the transmission case 3 covered with the transmission case cover 4. The V-belt type of automatic transmission 2 is disposed in the belt chamber S.

A soundproof cover 6 is attached using a plurality of bolts 7 onto the outside surface of the transmission case cover 4. A sponge-like sealing member 8 is interposed between both of the covers 4 and 6.

Here, constitution of the engine 1 will be roughly described.

As shown in FIG. 3, the engine 1 has a single cylinder 5 bored in a cylinder body 104 directed generally horizontally forward of the vehicle body of a scooter type of motorcycle. A piston 60 is slidably disposed in the cylinder 5. The piston 60 is connected through a connecting rod 8 to a crankshaft 13 rotatably disposed in the vehicle width direction.

A cylinder head 9 placed to cover the cylinder body 104 has an intake port 10 and an exhaust port 11 bored in upper and lower positions of the cylinder head 9. The intake and exhaust ports 10 and 11 are opened and closed according to appropriate timing with intake and exhaust valves 12 and 131 so that gas in the cylinder 5 is exchanged as required.

As shown in FIG. 3, the intake and exhaust valves 12 and 131 are slidably inserted into and held with valve guides 14 and 15 press-fitted into the cylinder head 9, and urged toward the closing side with springs 16 and 17, and their tops are in contact with one side ends of rocker arms 18 and 19. The rocker arms 18 and 19 are pivoted for swinging about their middle parts with shafts 20 and 21. The other side ends of the rocker arms 18 and 19 are in contact with cams formed integrally with a camshaft 22.

A chain sprocket (not shown) is attached to one end of the camshaft 22. An endless cam chain 30 is routed around between the chain sprocket and another sprocket 29 attached to the middle part of the crankshaft 13 (See FIG. 2).

The rotation of the crankshaft 13 is transmitted through the sprocket 29, the cam chain 30, and the chain sprocket (not shown) attached to the camshaft 22. When the camshaft 22 is driven at a specified speed (half the speed of the crankshaft 13), the intake and exhaust valves 12 and 131 are driven by the rocker arms 18, 19, to open and dose the intake and exhaust ports 10 and 11 according to appropriate timing. In this way, gas in the cylinder 5 is exchanged as required.

As shown in FIG. 2 in detail, the crankshaft 13 is rotatably supported with paired right and left bearings 31. A cooling fan 32 is attached to one (right) end of the crankshaft 13. A dynamo 33 is disposed inside the cooling fan 32. A starter wheel 34, and a drive pulley 35 as a component of the V-belt type of automatic transmission 2, are attached to the other (left) end of the crankshaft 13.

The drive pulley 35 is constituted with a fixed sheave 35a secured to one end of the crankshaft 13 and a movable sheave 35b supported to be slidable along the crankshaft 13. A plural number of centrifugal weights 37 are housed to be movable in radial directions in the space between the movable sheave 35b and a cam plate 36 secured to the crankshaft 13. A plural number of cooling fins 38 are formed integrally with the fixed sheave 35a of the drive pulley 35 to serve as a cooling fan.

As shown in FIG. 3, an intake pipe 312 connected to the intake port 10 is attached to the upper part of the cylinder head 9. A carburetor and an air cleaner (both not shown) are connected to the intake pipe 312. An exhaust pipe (not shown) is attached to the exhaust port 11 which is open to the lower part of the cylinder head 9. A muffler (not shown) is attached to the exhaust pipe.

The entire engine 1 constituted as described above is enclosed with an air shroud 40 made of a plastic material. Part of the air shroud 40 opposite the cooling fan 32 is provided with a cooling air introducing opening 40a coaxially with the crankshaft 13. As shown in FIG. 2, the air shroud 40 is provided, at its front part, with a plug hole 40b which is open to the obliquely side direction and behind it, with a round hole 40c for checking the top dead center. An ignition plug (not shown) is passed through the plug hole 40b and screwed into the cylinder head 9. A rubber cap 41 is removably fitted into the round hole 40c for checking the top dead center.

Next will be described the constitution of the transmission mechanism of the unit swing type of engine 10.

As shown in FIG. 1, in the rear part of the crankcase 3 are disposed a driven shaft 42, an intermediate shaft (not shown), and an output (wheel) shaft 43, parallel to each other. A driven pulley 44 and a centrifugal clutch 45 are attached to the driven shaft 42.

On the driven shaft 42 is rotatably supported a hollow shaft 46. To the inside end of the hollow shaft 46 is attached the fixed sheave 44a of the driven pulley 44. A movable sleeve 47 is slidably fitted over the hollow shaft 46. The movable sheave 44b of the driven pulley 44 is attached to the inside end of the movable sleeve 47. The movable sheave 44b is urged toward the fixed sheave 44a with a spring 48 compression-installed between the centrifugal clutch 45 and the movable sheave 44b itself. The V-belt type of automatic transmission 2 is constituted with; the driven pulley 44 constituted with the fixed sheave 44a and the movable sheave 44b, the drive pulley 35 disposed on the crankshaft 13, and an endless V-belt 49 routed around between the drive pulley 35 and the driven pulley 44.

The centrifugal clutch 45 is constituted with a clutch inside member 45a fixed to the outside end of the hollow shaft 46 and a clutch outside member 45b which is in a form of drum and secured at the outer end of driven shaft 42.

A drive gear 50 is integrally formed with the inside end of the driven shaft 42. A drive gear and a driven gear of a large and a small diameters respectively are attached to an intermediate shaft (not shown). The driven gear of the intermediate shaft meshes with the drive gear 50. The drive gear (not shown) of the intermediate shaft meshes with the large diameter driven gear 51 attached to the output shaft 43. A rear wheel 52 of the scooter type of motorcycle is attached to the end of the output shaft 43 protruding out of the transmission case 3. A kick lever 53 for kick-starting is shown in FIG. 1.

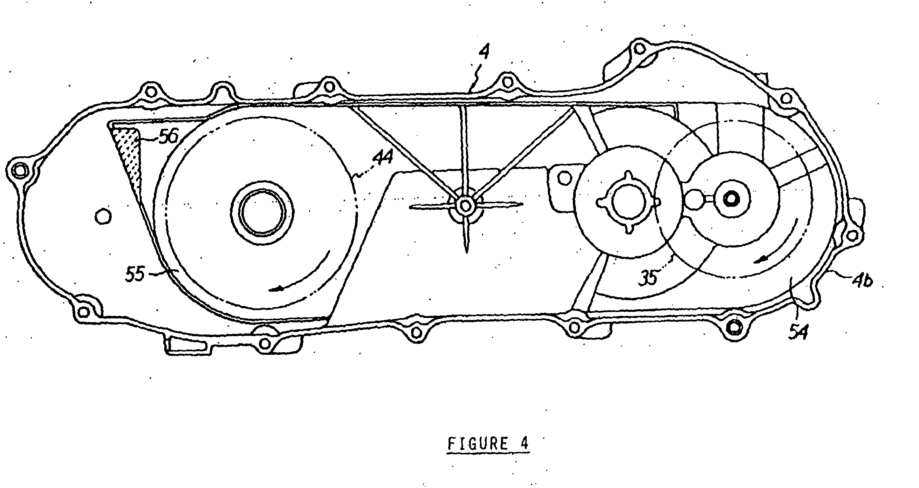

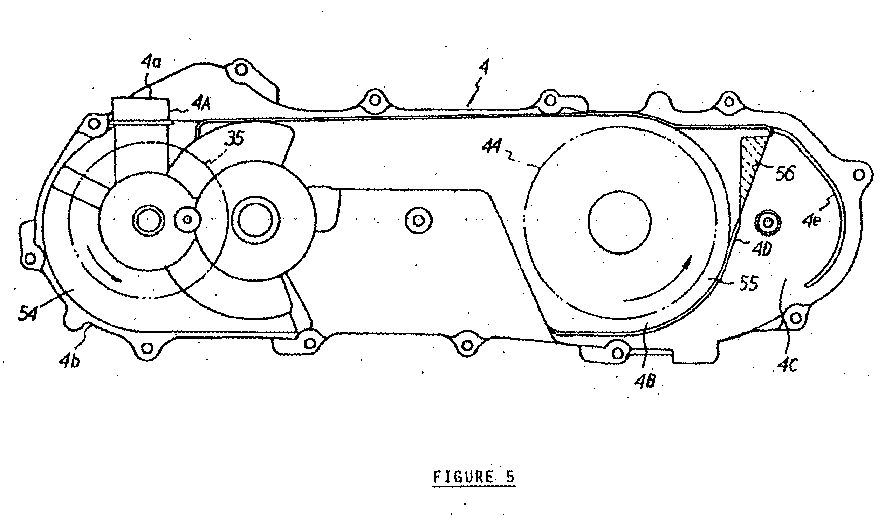

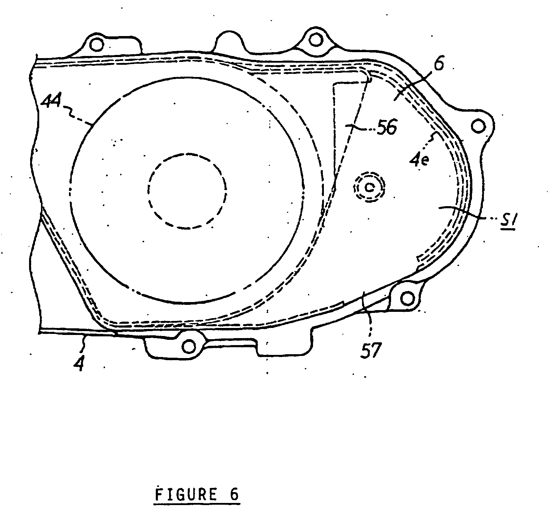

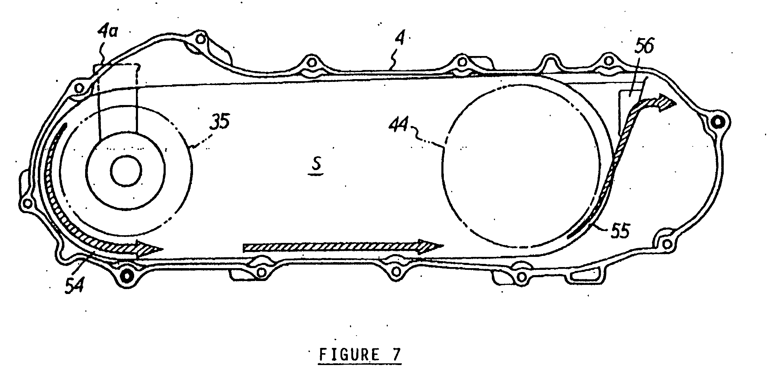

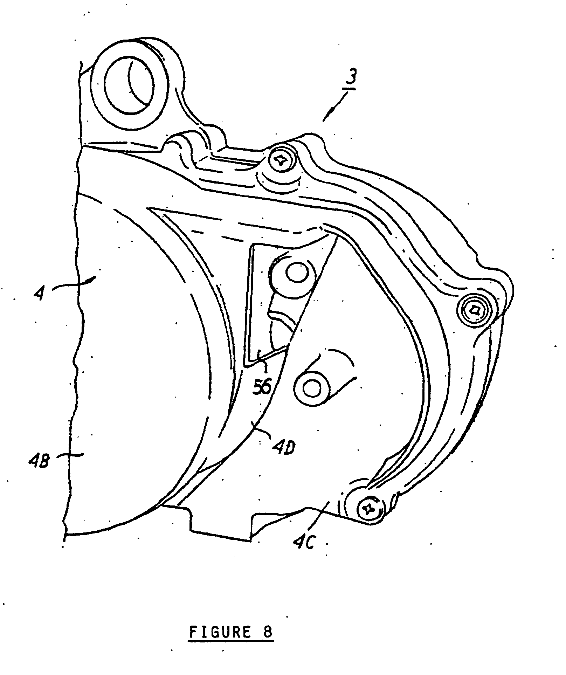

The constitution of the transmission case cover will be now described in reference to FIGs. 4 to 8. FIG. 4 is an inside view of the transmission case cover. FIG. 5 is an outside view of the transmission case cover. FIG. 6 is a side view of the rear part of the transmission case cover with a soundproof cover attached. FIG. 7 shows the air flow in the belt chamber. FIG. 8 is a view, as seen obliquely from above, of the rear part of the transmission case cover.

As shown in FIG. 5, a vertical boss 4A is integrally formed with the forward upper outside surface of the transmission case cover. The top end surface of the boss 4A is open to be a cooling air inlet 4a. The bottom end surface of the boss 4A is open to the belt chamber S formed inside the transmission case cover 4.

The front arcuate portion of the outside wall of the transmission case cover 4 forms an air introducing wall 4b. A spiral-shaped air (introducing or guiding) passage 54 with its cross-sectional area gradually increasing in the rotation (arrow in the figure) direction of the drive pulley 35 is formed between the air introducing wall 4b and the drive pulley 35 of the V-belt type of automatic transmission 2.

As shown in FIGs. 5 and 8, a stepped portion is formed with; the first outside wall surface 4B of the transmission case cover 4 covering one side ends of the driven shaft 42 and the driven pulley 44, the second outside wall surface 4C covering one side end in the vehicle width direction of the output shaft 43, and the third outside wall surface 4D extending in the vehicle width direction between the wall surfaces 4A and 4B. The third outside wall surface 4D is made to extend along the contour of the driven pulley 44 from below the lower edge to the rear central part of the driven pulley 44 to form an air (introducing or guiding) passage 55. A cooling air outlet 56 (the broken line-hatched part in FIGs. 4 and 5) is formed in part of the third outside wall 4D on an extended tangent line of the air introducing passage 55. The cooling air outlet 56 is open rearward through part of the third outside wall 3D above and behind the driven pulley 44. The air introducing passage 55 is formed with its cross-sectional area gradually increasing in the rotation (arrows in FIGs. 4 and 5) direction of the driven pulley 44.

As shown in FIGs. 5 and 8, the rear part of the third outside wall surface 3D of the transmission case cover 4 is provided with a generally arcuate rib 4e.

When the outside surface of the transmission case cover 4 is covered with the soundproof cover 6 as shown in FIG. 6, a space S1 is formed between both of the covers 4 and 6. The cooling air outlet 56 formed in the transmission case cover 4 is open in the upper part of the space S1 which is open downward to the atmosphere through a cooling air outlet 57.

Next will be described the function of the unit swing type of engine 10 constituted as described above.

When the engine 1 of the unit swing type of engine 10 is started as the kick lever 53 or a starter button (not shown) is operated and the crankshaft 13 rotates, the cooling fan 32 and the dynamo 33 both attached coaxially to the crankshaft 13 rotate together. At the same time, the rotation of the crankshaft 13 is transmitted through the drive pulley 35 of the V-belt type of automatic transmission 2, the V-belt 49, and the driven pulley 44 to the hollow shaft 46. The hollow shaft 46 and the clutch inside member 45a of the centrifugal clutch 45 secured to the hollow shaft 46 are driven together to rotate.

When the rotation speed of the crankshaft 13 is low, the centrifugal force working on the centrifugal weights 37 rotating together with the crankshaft 13 is small, and the centrifugal weights 37 remain unmoved in the position shown in FIGs. 1 and 2. At this time, the movable sheave 35b of the drive pulley 35 also remains in the position shown in the figures and the girdling diameter of the V-belt 49 around the drive pulley 44 is also small.

Therefore, the girdling diameter of the V-belt 49 around the driven pulley 44 is held large, and the rotation of the crankshaft 13 is reduced as it is transmitted to the hollow shaft 46 and the clutch inside member 45a of the centrifugal clutch 45. In this way, while the rotation speed of the clutch inside member 45a of the centrifugal clutch 45 is small and the centrifugal force working on the clutch inside member 45a of the centrifugal clutch 45 is smaller than a specified value, the centrifugal clutch 45 is in the off state, the rotation of the hollow shaft 46 and the clutch inside member 45a of the centrifugal clutch 45 is not transmitted to the driven shaft 42, and the hollow shaft 46 and the clutch inside member 45a of the centrifugal clutch 45 rotate freely on the driven shaft 42.

After that, when the rotation speed of the crankshaft 13 increases and the centrifugal force working on the clutch inside member 45a exceeds a specified value, the centrifugal clutch 45 is brought to the on state, the rotation of the hollow shaft 46 is transmitted through the centrifugal clutch 45 to the driven shaft 42, and the driven shaft 42 is driven to rotate. And the rotation of the driven shaft 42 is transmitted through a gear (not shown) attached to the intermediate shaft and a driven gear 51 attached to an output shaft 43, while being reduced in two stages, to the output shaft 43, and farther to the rear wheel 52 attached to the out put shaft 43, 50 that the scooter type of motorcycle is driven.

The magnitude of the centrifugal force working on the centrifugal weights 37 is in proportion to the rotation speed of the crankshaft 13. According to the magnitude of the centrifugal force, the centrifugal weights 37 move radially outward along the contact surface of the cam plate 36 to move the movable sheave 35b of the drive pulley 35 toward the fixed sheave 35a, and increase the girdling diameter of the V-belt 49 around the drive pulley 35. In contrast, the girdling diameter of the V-belt 49 around the driven pulley 44 decreases. As a result, the speed ratio of the driven shaft 42 to the crankshaft 13 increases gradually, to gradually increase the rotation speed of the driven shaft 42. In this way, automatic speed change is performed.

When the V-belt type of automatic transmission 2 is operated as described above and the drive pulley 35 is rotated, the fixed sheave 35a of the drive pulley 35 serves also as a cooling fan and draws cooling air through the cooling air inlet 4a of the transmission case cover 4 into the belt chamber S.

The cooling air introduced into the belt chamber S is stirred with the drive pulley 35 rotating in the direction of the arrow shown in FIG. 7 and flows in the direction of the arrow shown through the air introducing passage 54 formed around the drive pulley 35. As described before, the air introducing passage 54 is formed spirally with its cross-sectional area gradually increasing in the direction of the cooling air flow. Therefore, the velocity of the cooling air passing through the air introducing passage 54 decreases gradually and its dynamic pressure is held low.

The cooling air with its velocity reduced as described above flows as shown with the arrow in FIG. 7 through the belt chamber S toward the rear of the vehicle body to cool the belt chamber S, stirred with the driven pulley 44 rotating in the arrow direction, flows through the air introducing passage 55 in the arrow direction obliquely rear upward and discharged out of the belt chamber S through the cooling air outlet 56 formed ahead of the flow direction, flows into the space S1 formed between the covers 4 and 6 to expand, flows down through the space S1, and finally discharged to the atmosphere through the cooling air outlet 57 (See FIG. 6). Here, the air introducing passage 55, like the air introducing passage 54, is formed in the spiral shape with its cross-sectional area gradually increasing in the direction of the cooling air flow. Therefore, the velocity of the cooling air passing through the air introducing passage 55 decreases gradually and its dynamic pressure is held low.

With this embodiment as described above, the air introducing passages 54 and 55 of the spiral shape are formed around the drive and driven pulleys 35 and 44 of the V-belt type of automatic transmission 2 respectively, the cooling air velocity is reduced as the air flows through the spiral-shaped air introducing passages 54 and 55 having gradually increasing cross-sectional areas respectively. The cooling air with the reduced velocity flows without changing greatly its flow direction in the tangential direction through the air introducing passage 55 around the driven pulley 44 and out of the belt chamber S through the cooling air outlet 56. Therefore, the flow energy loss of the cooling air in the belt chamber s is held low, the cooling efficiency is enhanced, and power loss is held low.

Since the air introducing passage 55 is formed by utilizing the third outside wall surface 4D constituting the stepped portion of the transmission case cover 4, cooling efficiency is enhanced in comparison with forming the air introducing passage 55 with a rib, while holding down the increase in the weight of the transmission case cover 4, and securing the rigidity required of the transmission case cover 4.

Furthermore, this embodiment is arranged that the rearward-opening cooling air outlet is formed in the stepped portion located higher than the driven wheel 42 and deeper than the first outside wall surface 4B of the transmission case cover 4. As a result, it is possible to prevent water and dust from entering the belt chamber S, to further reduce flow energy loss of the cooling air, and to additionally enhance cooling efficiency.

Moreover, since the space S1 serving as an expansion chamber is formed with the soundproof cover 6 in the downstream position from the cooling air outlet 56, it is possible to reduce noise while more effectively preventing water and dust from entering the belt chamber S.

On the part of the engine 1, cooling air is introduced through the cooling air introducing inlet 40a bored in the right side wall of the air shroud 40 into the interior of the air shroud 40 as the cooling fan 32 is rotated as described above, and the cooling air flows through the air shroud 40 toward the front of the vehicle body and cools various parts of the engine 1 including the cylinder body 104 and the cylinder head 9.

The above description relates to a transmission case cover structure of a unit swing type of engine. The unit swing type of engine is constituted with a V-belt type of automatic transmission, which in turn is constituted with a drive pulley attached to a crankshaft extending in the vehicle width direction, a driven pulley attached to a driven shaft extending in the vehicle width direction behind the crankshaft, and an endless V-belt fitted around and stretched between the drive and driven pulleys. The unit swing type of engine is housed in a belt chamber formed by covering with a transmission case cover a side opening of a transmission case protruding in the vehicle width direction from one side end of the crankcase of the engine.

The transmission case cover structure is constituted with the following features:

A stepped portion is formed with; a first outside wall surface of the transmission case cover covering the one side ends in the vehicle width direction of the driven shaft and the driven pulley, a second outside wall surface covering the one side end in the vehicle width direction of the output shaft, and a third outside wall surface extending in the vehicle width direction to interconnect the first and second outside wall surfaces.

The third outside wall surface is formed around the contour of the driven pulley to form an air introducing passage around the driven pulley.

A cooling air outlet is formed in part of the outside wall on the extended tangent line of the air introducing passage.

As a result, effects are provided that belt chamber cooling effect is enhanced and power loss is reduced.

Therefore, since the outside wall surface is formed around the contour of the driven pulley to form an air introducing passage around the driven pulley and a cooling air outlet is formed in part of the outside wall on an extended tangent line of the air introducing passage, the cooling air flows through the air introducing passage without greatly changing its flow direction in the tangential direction of the driven pulley and flows out of the belt chamber through the cooling air outlet. This reduces the flow energy loss of the cooling air in the belt chamber, enhances the cooling efficiency in the belt chamber, and reduces power loss. Furthermore, since part of the outside wall, constituting the stepped portions, of the transmission case cover is utilized to form the air introducing passage, the cooling efficiency is enhanced, in comparison with the case of forming the air introducing passage with a rib, while holding down the increase in the weight of the transmission case cover and securing rigidity required for the transmission case cover.

The third outside wall surface of the transmission case cover is made to extend around the contour of the driven pulley, from below the lower edge to the rear central part of the driven pulley, to form the air introducing passage around the driven pulley, and the cooling air outlet open toward the rear is formed in part of the outside wall above behind the driven pulley.

Since the cooling air outlet is made to be open toward the rear in the stepped portion located deeper than the first outside wall surface of the transmission case cover, water is prevented from entering the belt chamber and the flow energy loss of the cooling air is further reduced to further enhance the cooling efficiency.

A soundproof cover is provided to cover the outside wall surface of the transmission case cover to form a space between the soundproof cover and the transmission case cover, and the cooling air outlet is made open to the space.

Since the space functioning as an expansion chamber is formed in a downstream position from the cooling air outlet with the soundproof cover, noise is reduced while preventing more effectively water and dust from the entering the belt chamber.

Regarding the above embodiment a transmission means especially for a unit type of engine is provided. Said embodiment comprises a V-belt type of automatic transmission 2 with a drive pulley 35, a driven pulley 44 and an endless V-belt 49 fitted around said drive and driven pulley 35,44. Said drive and driven pulley 35,44 and said endless V-belt 49 are housed in a belt chamber S formed by a transmission case 3. A transmission case cover 4 is provided on a side opening of said transmission case 3, wherein said transmission case cover 4 defines an air passage 55 around said driven pulley 44. The air passage 55 gradually increases in direction of a cooling air flow.

Said transmission case cover 4 comprises a first outside wall surface 4B covering the driven pulley 44 and a third outside wall surface 4D extending from said first outside wall surface 4B and formed around a contour of said driven pulley 44 to form said air passage 55 around said driven pulley 44. A cooling air outlet 56 is formed on said third outside wall surface 4D.

Said third outside wall surface 4D is formed to cover a lower edge area of the driven pulley 44 and extends to cover a rear edge of said driven pulley 44 to form said air passage 55 around said driven pulley 44. Said cooling air outlet 56 is formed in a rear part of said third outside wall surface above and behind said rear edge of the driven pulley 44. Said cooling air outlet 56 is formed on said third outside wall surface 4D on an extended tangent line of said air introducing passage 55.

Said driven pulley 44 is connected with a driven shaft 42 and an output shaft 43 is provided which is spaced from driven shaft 42 and connected therewith. Said transmission case cover 4 comprises a second outside wall surface 4C covering the output shaft 43 and said third outside wall surface 4D is interconnecting said first outside wall surface 4B and said second outside wall surface 4B to constitute a stepped portion of the transmission case cover 4.

A soundproof cover 6 is provided to cover said outside wall surfaces of the transmission case cover 4, wherein a space S1 is formed between said soundproof cover 6 and the transmission case cover 4 and said cooling air outlet 56 is made open to said space S1.

An arcuate rib 4e is provided on the second outside wall surface 4C to define said space S1, wherein said cooling air outlet 56 is open in an upper part of said space S1 and said space S1 is provided with a further cooling air outlet 57 in a downward direction.

A cooling air inlet 4a is provided on said transmission case 3 and an further air passage 54 is provided around said drive pulley 35 from said cooling air inlet 4a and a cross-sectional area of said air passage 54 gradually increases in a direction of a cooling air flow.

Furthermore the above described embodiment also teaches a motor vehicle with an engine 1 especially for a unit type of engine, a vehicle body and a transmission means with a V-belt type of automatic transmission 2. Said transmission means is constructed as mentioned above, wherein said V-belt type of automatic transmission 2 is provided with a drive pulley 35, a driven pulley 44 and an endless V-belt 49 fitted around said drive and driven pulley 35,44, said drive and driven pulley 35,44 and said endless V-belt 49 are housed in a belt chamber S formed by a transmission case 3 and a transmission case cover 4 provided on a side opening of said transmission case 3 in the width direction of the vehicle body, wherein said transmission case cover 4 defines an air passage 55 around said driven pulley 44.

Said transmission case cover 4 comprises a first outside wall surface 4B covering the driven pulley 44 in the width direction of the vehicle body and a third outside wall surface 4D extending in the width direction of the vehicle body from said first outside wall surface 4B and formed around a contour of said driven pulley 44 to form said air passage 55 around said driven pulley 44, wherein a cooling air outlet 56 is formed on said third outside wall surface 4D. Said third outside wall surface 4D is formed to cover a lower edge area of the driven pulley 44 and extends to cover a rear edge of said driven pulley 44 to form said air passage 55 around said driven pulley 44, wherein said cooling air outlet 56 is formed in a rear part of said third outside wall surface above and behind said rear edge of the driven pulley 44.

According to the motor vehicle, said driven pulley 44 is connected with a driven shaft 42 extending in the width direction of the vehicle body and an output shaft 43 extending in the width direction of the vehicle body is provided which is spaced from driven shaft 42 and connected therewith, and said transmission case cover 4 comprises a second outside wall surface 4C covering the output shaft 43 in the width direction of the vehicle body and said third outside wall surface 4D is interconnecting said first outside wall surface 4B and said second outside wall surface 4B to constitute a stepped portion of the transmission case cover 4.

The soundproof cover 6 is provided to cover said outside wall surfaces of the transmission case cover 4 in the width direction of the vehicle body, wherein a space S1 is formed between said soundproof cover 6 and the transmission case cover 4 and said cooling air outlet 56 is made open to said space S1.

## Claims

1. Transmission means especially for a unit type of engine with a V-belt type of automatic transmission (2) provided with a drive pulley (35), a driven pulley (44) and an endless V-belt (49) fitted around said drive and driven pulley (35,44), said drive and driven pulley (35,44) and said endless V-belt (49) are housed in a belt chamber (S) formed by a transmission case (3) and a transmission case cover (4) provided on a side opening of said transmission case (3), wherein said transmission case cover (4) defines an air passage (55) around said driven pulley (44), **characterized in that**
a cross-section of said air passage (55) around said driven pulley (44) gradually increases in direction of a cooling air flow.

2. Transmission means according to claim 1, **characterized in that** said transmission case cover (4) comprises a first outside wall surface (4B) covering the driven pulley (44) and a third outside wall surface (4D) extending from said first outside wall surface (4B) and formed around a contour of said driven pulley (44) to form said air passage (55) around said driven pulley (44), wherein a cooling air outlet (56) is formed on said third outside wall surface (4D).

3. Transmission means according to claim 2, **characterized in that** said third outside wall surface (4D) is formed to cover a lower edge area of the driven pulley (44) and extends to cover a rear edge of said driven pulley (44) to form said air passage (55) around said driven pulley (44), wherein said cooling air outlet (56) is formed in a rear part of said third outside wall surface above and behind said rear edge of the driven pulley (44).

4. Transmission means according to claim 2 or 3, **characterized in that** said cooling air outlet (56) is formed on said third outside wall surface (4D) on an extended tangent line of said air introducing passage (55).

5. Transmission means according to at least one of the claims 2 to 4, **characterized in that** said driven pulley (44) is connected with a driven shaft (42) and an output shaft (43) is provided which is spaced from driven shaft (42) and connected therewith, and said transmission case cover (4) comprises a second outside wall surface (4C) covering the output shaft (43) and said third outside wall surface (4D) is interconnecting said first outside wall surface (4B) and said second outside wall surface (4B) to constitute a stepped portion of the transmission case cover (4).

6. Transmission means according to at least one of the claims 2 to 5, **characterized in that** a soundproof cover (6) is provided to cover said outside wall surfaces of the transmission case cover (4), wherein a space (S1) is formed between said soundproof cover (6) and the transmission case cover (4) and said cooling air outlet (56) is made open to said space (S1).

7. Transmission means according to claim 6, **characterized in that** an arcuate rib (4e) is provided on the second outside wall surface (4C) to define said space (S1), wherein said cooling air outlet (56) is open in an upper part of said space (S1) and said space (S1) is provided with a further cooling air outlet (57) in a downward direction.

8. Transmission means according to at least one of the claims 1 to 7, **characterized in that** a cooling air inlet (4a) is provided on said transmission case (3) and an further air passage (54) is provided around said drive pulley (35) from said cooling air inlet (4a) and a cross-sectional area of said further air passage (54) gradually increases in a direction of a cooling air flow.

9. Motor vehicle with an engine (1) especially for a unit type of engine, a vehicle body and a transmission means according to at least one of the claims 1 to 8.

## Patentansprüche

1. Getriebeeinrichtung, insbesondere für einen Typ einer Motoreinheit mit einem automatischen Getriebes (2) vom Keilriementyp, versehen mit einer Antriebsriemenscheibe (35), einer angetriebenen Scheibe (44) und einem Endlos- Keilriemen (49), eingesetzt rund um die antreibende- und die angetriebene Riemenscheibe (35, 44), wobei die antreibende- und die angetriebene Riemenscheibe (35, 44) und der Endlos- Keilriemen (49) in einer Riemenkammer (S), gebildet durch ein Getriebegehäuse (3) und eine Getriebegehäuseabdeckung (4), vorgesehen auf einer Seitenöffnung des Getriebegehäuses (3), untergebracht sind, wobei die Getriebegehäuseabdeckung (4) einen Luftkanal (55) rund um die angetriebene Riemenscheibe (44) bildet, **dadurch gekennzeichnet, dass**
sich ein Querschnitt des Luftkanales (55) rund um die angetriebene Riemenscheibe (44) allmählich in eine Richtung einer Kühlluftströmung vergrößert.

2. Getriebeeinrichtung nach Anspruch 1, **dadurch gekennzeichnet, dass** die Getriebegehäuseabdeckung (4) aufweist eine erste Außenwandoberfläche (4B), die die angetriebene Riemenscheibe (44) abdeckt und eine dritte Außenwandoberfläche (4D), die sich von der ersten Außenwandoberfläche (4b) erstreckt und rund um einen Umriss der angetriebenen Riemenscheibe (44) gebildet ist, um den Luftkanal (55) rund um die angetriebene Riemenscheibe (44) zu bilden, wobei ein Kühlluftauslass (56) an der dritten Außenwandoberfläche (4D) gebildet ist.

3. Getriebeeinrichtung nach Anspruch 2, **dadurch gekennzeichnet, dass** die dritte Außenwandoberfläche (4D) gebildet ist, um einen unteren Kantenbereich der angetriebenen Riemenscheibe (44) abzudecken und sich erstreckt, um eine hintere Kante der angetriebenen Riemenscheibe (44) abzudecken, um den Luftkanal (55) rund um die angetriebene Riemenscheibe (44) zu bilden, wobei der Kühlluftauslass (56) in einem hinteren Teil der dritten Außenwandoberfläche oberhalb und hinter der hinteren Kante der angetriebenen Riemenscheibe (44) gebildet ist.

4. Getriebeeinrichtung nach Anspruch 2 oder 3, **dadurch gekennzeichnet, dass** der Kühlluftauslass (56) an der dritten Außenwandoberfläche (4D) an einer verlängerten Tangentenlinie des Lufteinlasskanals (55) gebildet ist.

5. Getriebeeinrichtung nach zumindest einem der Ansprüche 2 bis 4, **dadurch gekennzeichnet, dass** die angetriebene Riemenscheibe (44) mit einer angetriebenen Welle (42) verbunden ist und eine Ausgangswelle (43) vorgesehen ist, die von der angetriebenen Welle (42) beabstandet und mit dieser verbunden ist, und die Getriebegehäuseabdeckung (4) eine zweite Außenwandoberfläche (4C) aufweist, die die Ausgangswelle (43) abdeckt und die dritte Außenwandoberfläche (4D) und die erste Außenwandfläche (4B) und die zweite Außenwandoberfläche (4B) verbindet, um einen gestuften Abschnitt des Getriebegehäuseabdeckung (4) zu bilden.

6. Getriebeeinrichtung nach zumindest einem der Ansprüche 2 bis 5, **dadurch gekennzeichnet, dass** eine schalldichte Abdeckung (6) vorgesehen ist, um die Außenwandoberflächen der Getriebegehäuseabdeckung (4) abzudecken, wobei ein Raum (S1) zwischen der schalldichte Abdeckung (6) und der Getriebegehäuseabdeckung (4) gebildet ist und der Kühlluftauslass (56) veranlasst ist, sich zu dem Raum (S1) zu öffnen.

7. Getriebeeinrichtung nach Anspruch 6, **dadurch gekennzeichnet, dass** eine gebogene Rippe (4e) an der zweiten Außenwandoberfläche (4C) vorgesehen ist, um einen Raum (S1) zu bilden, wobei der Kühlluftauslass (56) in einem oberen Teil des Raumes (S1) offen ist und der Raum (S1) mit einem weiteren Kühlluftauslass (57) in einer abwärtigen Richtung versehen ist.

8. Getriebeeinrichtung nach zumindest einem der Ansprüche 1 bis 7, **dadurch gekennzeichnet, dass** ein Kühlluftauslass (4a) an dem Getriebegehäuse (3) vorgesehen ist und ein weiterer Luftkanal (54) rund um die Antriebsriemenscheibe (35) von dem Kühlluftauslass (4a) vorgesehen ist und sich eine Querschnittsfläche des weiteren Luftkanales (54) allmählich sich in einer Richtung einer Kaltluftströmung erhöht.

9. Motorfahrzeug mit einem Motor (1), insbesondere vom Typ einer Motoreinheit, einer Fahrzeugkarosserie und einer Getriebeeinrichtung nach zumindest einem der Ansprüche 1 bis 8.

## Revendications

1. Moyens de transmission particulièrement pour un moteur du type bloc ayant une transmission automatique (2) du type à courroie en V comportant une poulie d'entraînement (35), une poulie entraînée (44) et une courroie sans fin en V (49) ajustée autour desdites poulies d'entraînement et entraînée (35, 44), lesdites poulies d'entraînement et entraînée (35, 44) et ladite courroie sans fin en V (49) étant logées dans une chambre de courroie (S) formée par un carter de transmission (3) et un couvercle de carter de transmission (4) disposé sur une ouverture latérale dudit carter de transmission (3), dans lesquels ledit couvercle de carter de transmission (4) définit un passage d'air (55) autour de ladite poulie entraînée (44), **caractérisés en ce que**
une section transversale dudit passage d'air (55) autour de ladite poulie entraînée (44) augmente progressivement dans le sens d'un écoulement d'air de refroidissement.

2. Moyens de transmission selon la revendication 1, **caractérisés en ce que** ledit couvercle de carter de transmission (4) comprend une première surface de paroi extérieure (4B) recouvrant la poulie entraînée (44) et une troisième surface de paroi extérieure (4D) s'étendant à partir de ladite première surface de paroi extérieure (4B) et formée autour d'un contour de ladite poulie entraînée (44) pour former ledit passage d'air (55) autour de ladite poulie entraînée (44), dans lesquels une sortie d'air de refroidissement (56) est formée sur ladite troisième surface de paroi extérieure (4D).

3. Moyens de transmission selon la revendication 2, **caractérisés en ce que** ladite troisième surface de paroi extérieure (4D) est formée pour recouvrir une zone de bord inférieure de la poulie entraînée (44) et s'étend pour recouvrir un bord arrière de ladite poulie entraînée (44) pour former ledit passage d'air (55) autour de ladite poulie entraînée (44), dans lesquels ladite sortie d'air de refroidissement (56) est formée dans une partie arrière de ladite troisième surface de paroi extérieure au-dessus et derrière ledit bord arrière de la poulie entraînée (44).

4. Moyens de transmission selon la revendication 2 ou 3, **caractérisés en ce que** ladite sortie d'air de refroidissement (56) est formée sur ladite troisième surface de paroi extérieure (4D) sur une ligne tangente étendue dudit passage d'introduction d'air (55).

5. Moyens de transmission selon au moins une des revendications 2 à 4, **caractérisés en ce que** ladite poulie entraînée (44) est reliée à un arbre entraîné (42) et on prévoit un arbre de sortie (43) qui est espacé de l'arbre entraîné (42) et relié à ce dernier, et ledit couvercle de carter de transmission (4) comprend une deuxième surface de paroi extérieure (4C) recouvrant l'arbre de sortie (43) et ladite troisième surface de paroi extérieure (4D) relie ladite première surface de paroi extérieure (4B) et ladite deuxième surface de paroi extérieure (4B) pour constituer une partie étagée du couvercle de carter de transmission (4).

6. Moyens de transmission selon au moins une des revendications 2 à 5, **caractérisés en ce que** l'on prévoit un couvercle insonorisé (6) pour recouvrir lesdites surfaces de parois extérieures du couvercle de carter de transmission (4), dans lesquels un espace (S1) est formé entre ledit couvercle insonorisé (6) et le couvercle de carter de transmission (4), et ladite sortie d'air de refroidissement (56) est ouverte sur ledit espace (S1).

7. Moyens de transmission selon la revendication 6, **caractérisés en ce qu'**une nervure en arc (4e) est réalisée sur la deuxième surface de paroi extérieure (4C) pour définir ledit espace (S1), dans lesquels ladite sortie d'air de refroidissement (56) est ouverte dans une partie supérieure dudit espace (S1), et ledit espace (S1) est muni d'une sortie supplémentaire d'air de refroidissement (57) dans le sens vers le bas.

8. Moyens de transmission selon au moins une des revendications 1 à 7, **caractérisés en ce qu'**une entrée d'air de refroidissement (4a) est réalisée sur ledit carter de transmission (3) et **en ce qu'**un passage d'air supplémentaire (54) est réalisé autour de ladite poulie d'entraînement (35) à partir de ladite entrée d'air de refroidissement (4a) et une section transversale dudit passage d'air supplémentaire (54) augmente progressivement dans le sens d'un écoulement d'air de refroidissement.

9. Véhicule motorisé comportant un moteur (1) particulièrement pour moteur du type bloc, un châssis de véhicule et des moyens de transmission selon au moins une des revendications 1 à 8.
